# EUROPÄISCHE PATENTANMELDUNG

(11) **EP 2 383 207 A2**
(43) Veröffentlichungstag der Anmeldung: **02.11.2011**
(21) Anmeldenummer: 11164110.6
(22) Anmeldetag: 28.04.2011
(51) Int. Cl.: B65D 90/34, B65D 90/62, B65D 90/32

(54) **Druckentlastungsvorrichtung**

(30) Priorität: 30.04.2010 DE 102010016725
(71) Anmelder: Silotech s.r.o., 07801 Secovce (SK)
(72) Erfinder: Ostmann, Klaus, 64293 Darmstadt (DE); Ostmann, Francois, 64293 Darmstadt (DE); Kuhn, Sven, 64285 Darmstadt (DE)
(74) Vertreter: Katscher Habermann Patentanwälte

(57) **Zusammenfassung**

Die Erfindung betrifft eine Druckentlastungsvorrichtung mit einer auf einem Klappenrahmen (4) schwenkbar gelagerten Druckentlastungsklappe (5) und einer Prallvorrichtung (6). Die Druckentlastungsklappe (5) ist erfindungsgemäß aus einem Material mit Wabenstruktur ausgebildet. Als Werkstoff kommen beispielsweise Kunststoff, Aluminium oder andere metallische Werkstoffe in Frage. Die Druckentlastungsklappe (5) kann aus mehreren Schichten (5', 5", 5"') des Materials mit Wabenstruktur und längs eines Umfangs beispielsweise polygonal ausgebildet sein. An einer oberen Seite der Druckentlastungsklappe (5) kann eine Druckentlastungsklappenrückhaltevorrichtung angebracht sein. Die Druckentlastungsklappenrückhaltevorrichtung kann auch am Klappenrahmen (4) oder am Schlotflansch befestigt sein. Die Druckentlastungsklappe (5) wird durch die Druckentlastungsklappenrückhaltevorrichtung mit dem Klappenrahmen (4) verbunden. Zudem kann die Druckentlastungsklappe (5) beheizbar sein und in einer beliebigen Einbaulage verbaut werden.

## Beschreibung

Die Erfindung betrifft eine Druckentlastungsvorrichtung zum Schutz geschlossener Systeme, wie zum Beispiel Silos oder Rohrleitungen, vor Auswirkungen ungewollter Druckerhöhungen, zum Beispiel bei Explosionen, mit einer auf einem Klappenrahmen schwenkbar gelagerten Druckentlastungsklappe und einer Prallvorrichtung.

Eine solche Druckentlastungsvorrichtung dient dem Schutz eines geschlossenen Systems, wie zum Beispiel eines Rohrleitungssystems oder eines Silos, vor den Auswirkungen einer ungewollten Drucküberhöhung innerhalb des geschlossenen Systems, die beispielsweise durch eine Explosion ausgelöst werden kann.

Eine vergleichbare Druckentlastungsvorrichtung ist zum Beispiel aus der DE 20 2006 018 244 U1 bekannt. Bei der beschriebenen Druckentlastungsvorrichtung öffnet die Druckentlastungsklappe im Falle einer Explosion und entlastet das geschlossene Rohrleitungssystem. Die Öffnungsgeschwindigkeit der Druckentlastungsklappe im Explosionsfall ist sehr hoch. Daher wird die Druckentlastungsklappe durch eine Prallvorrichtung abgebremst. Die Bewegungsenergie die dabei von der Prallvorrichtung aufgenommen werden muss, wird insbesondere durch die Masse der Druckentlastungsklappe bestimmt. Daher wird die beschriebene Druckentlastungsklappe aus einem Kohle-/Glasfasermaterial hergestellt.

Aus der EP 0 232 478 B1 ist eine
Druckentlastungsvorrichtung bekannt, deren
Druckentlastungsklappe im normalen Betriebszustand des geschlossenen Systems durch eine Druckentlastungsklappenrückhaltevorrichtung, bestehend aus einem Scharnierhebel mit einer Scharnierfeder und einer Druckentlastungsklappenklemmvorrichtung, dichtend mit dem Klappenrahmen verbunden ist. Dieser Scharnierhebel ist am Klappenrahmen befestigt und wird mittels einer Scharnierfeder gehalten. Die Federkraft dieser Scharnierfeder ist derart dimensioniert, dass der Scharnierhebel im Explosionsfall die Druckentlastungsklappe frei gibt.

Die vorangehend beschriebenen Druckentlastungsvorrichtungen können jedoch weiter verbessert werden. So kann es beispielsweise vorkommen, dass trotz der leichten Bauweise die bekannten Druckentlastungsklappen bei starken Explosionen ganz oder teilweise abgesprengt werden können. Dadurch können Schäden an Material und Verletzungen von Personen verursacht werden. Darüberhinaus ist zur Erreichung der gewünschten Steifigkeit ein speziell auf Druckentlastungsklappen ausgelegter Aufbau der Druckentlastungsklappen notwendig. So wird beispielsweise der Kohle/Glasfaseraufbau der Druckentlastungsklappe durch spezielle Stützstrukturen versteift und eine untere Seite der Druckentlastungsklappe kugelförmig ausgebildet. Dies führt zu einem erheblichen Herstellungsaufwand. Zudem werden bei den ausgeführten Druckentlastungsklappen die Druckentlastungsklappenverschlüsse an den Klappenrahmen befestigt, um die Materialstruktur und damit die Steifigkeit der Druckentlastungsklappen nicht zu beeinflussen. Bestimmte Einbaulagen erfordern jedoch den Einbau der Druckentlastungsklappenrückhaltevorrichtung an den Druckentlastungsklappen.

Der Erfindung liegt daher die Aufgabe zu Grunde, eine Druckentlastungsklappe der eingangs beschriebenen Art zu entwickeln, die mit handelsüblichen Werkzeugen, z.B. einer CNC-Fräsmaschine, hergestellt werden kann, eine hohe Festigkeit und ein niedriges Gewicht besitzt und für beliebige Einbaulagen eingesetzt werden kann.

Diese Aufgabe wird bei einer Druckentlastungsvorrichtung der eingangs genannten Gattung erfindungsgemäß dadurch gelöst, dass die Druckentlastungsklappe aus einem Material mit Wabenstruktur ausgebildet ist. Solche Materialien weisen eine hohe Festigkeit und gleichzeitig ein niedriges Gewicht auf. Dies wird erreicht, in dem z.B. dünne Aluminiumfolien oder hochbelastbare Kunststofffolien miteinander verklebt werden. Das so entstandene Material kann zum Beispiel mit einer CNC-Fräsmaschine bearbeitet werden. Auf Grund des gleichmäßigen Aufbaus des Materials führen, zum Beispiel für Scharnierhebel benötigte, Bohrungen zu keiner beziehungsweise einer sehr geringen Änderung der Steifigkeit des Materials.

Eine vorteilhafte Ausbildung des Erfindungsgegenstands sieht vor, dass die Druckentlastungsklappe aus Kunststoff, Aluminium oder anderen metallischen Werkstoffen besteht. Diese Werkstoffe bieten eine besonders hohe Steifigkeit bei gleichzeitig niedrigem Gewicht.

Durch die Ausbildung der Druckentlastungsklappe aus mehreren Schichten des Materials mit Wabenstruktur kann die Steifigkeit der Druckentlastungsklappe variiert werden.

Eine weitere vorteilhafte Ausgestaltung sieht vor, die Druckentlastungsklappe bereichsweise aus mehreren Schichten des Materials mit Wabenstruktur auszubilden. Dadurch kann die Steifigkeit der Druckentlastungsklappe an die Belastung im Explosionsfall durch Veränderung der Dicke des Gesamtaufbaus gezielt angepasst werden.

Üblicherweise wird die Druckentlastungsklappe längs eines Umfangs oval oder kreisrund ausgeführt. Neben diesen aus der Praxis bekannten Ausführungsformen wird gemäß einer besonderen Ausführungsform vorgeschlagen, dass die Druckentlastungsklappe längs eines Umfangs polygonal ausgebildet ist. Durch die abschnittsweise gerade Ausführung der Seitenkanten der Druckentlastungsklappe kann die Form der Druckentlastungsklappe einfach an die Form des Klappenrahmens beziehungsweise Schlotflansches angepasst werden. Zudem können die Druckentlastungsklappenrückhaltevorrichtungen einfacher an dem Klappenrahmen, dem Schlotflansch oder der Druckentlastungsklappe angebracht werden. Im Vergleich zu einer ovalen oder kreisrunden Ausbildung der Druckentlastungsklappe wird außerdem der Flächeninhalt einer oberen Seite der Druckentlastungsklappe vergrößert. Dadurch erhöht sich auch der Luftwiderstand beim Öffnen der Druckentlastungsklappe und die auf die Druckentlastungsklappe und die Prallvorrichtung wirkenden Kräfte verringern sich.

Erfindungsgemäß wird weiter vorgeschlagen, dass auf einer oberen Seite der Druckentlastungsklappe mindestens eine Druckentlastungsklappenrückhaltevorrichtung angebracht ist. Durch den Einsatz mehrerer Druckentlastungsklappenverschlüsse kann die einzelne Druckentlastungsklappenrückhaltevorrichtung kleiner dimensioniert werden. Dies führt zu einer besseren Verteilung des zusätzlichen Gewichts auf der Druckentlastungsplatte und erleichtert die notwendige Einstellung der Federkraft.

Eine Modifikation dieses Erfindungsgedankens sieht vor, dass mindestens eine Druckentlastungsklappenrückhaltevorrichtung am Klappenrahmen oder an einem Schlotflansch befestigt ist. Dadurch werden weitere Einbaulagen ermöglicht und die notwendige Einstellung der Federkraft erleichtert.

Eine weitere vorteilhafte Ausgestaltung des Erfindungsgegenstands sieht vor, dass die Druckentlastungsklappe durch die Druckentlastungsklappenrückhaltevorrichtung mittels Scharnierfedern über eine Scharnierstange mit dem Klappenrahmen verbunden wird, wobei eine Scharnierlagerstange zwischen einer Scharnierfeder und einer Druckentlastungsklappenklemmvorrichtung angeordnet ist und die Scharnierfeder zwischen dem Klappenrahmen oder dem Schlotflansch oder der Druckentlastungsklappe und der Scharnierstange angebracht ist. Dadurch wird die benötigte Federkraft der Scharnierfeder verringert und die Druckentlastungsklappenverschlüsse können weiter verkleinert werden.

Erfindungsgemäß wird weiter vorgeschlagen, dass die Druckentlastungsklappe beheizbar ist. Dadurch kann Schnee, der sich auf der Druckentlastungsklappe befindet, abgetaut werden. Dies ist notwendig, damit im Falle einer Explosion die Druckentlastungsklappe rechtzeitig öffnet.

Schließlich sieht eine weitere Ausgestaltung der Druckentlastungsvorrichtung vor, dass eine Einbaulage der Druckentlastungsvorrichtung beliebig vorgebbar ist. Dadurch kann die Druckentlastungsvorrichtung dort platziert werden, wo Bauraum zur Verfügung steht.

Weitere Einzelheiten der Erfindung werden in der Zeichnung anhand von schematisch dargestellten Ausführungsformen beschrieben.

Hierbei zeigt:
Figur 1 eine schematische Darstellung des Aufbaus eines Materials mit Wabenstruktur,
Figur 2 eine Seitenansicht einer Druckentlastungsvorrichtung,
Figur 3 Schnittansicht einer Druckentlastungsvorrichtung,
Figur 4 eine Aufsicht einer Druckentlastungsvorrichtung,
Figur 5 eine Seitenansicht einer Druckentlastungsklappenrückhaltevorrichtung
Figur 6 eine teilweise geschnittene Seitenansicht einer Druckentlastungsklappenrückhaltevorrichtung,
Figur 7 eine Ansicht eines Silos mit oben und seitlich angebrachter Druckentlastungsvorrichtung

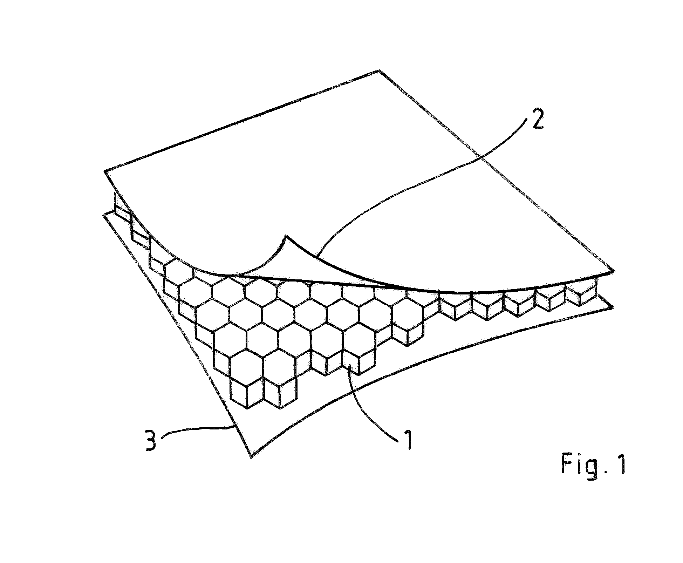

In Figur 1 ist der Aufbau eines Materials mit Wabenstruktur schematisch dargestellt. Zur Darstellung einer inneren Struktur 1 des Materials, sind eine obere 2 und eine untere Außenfläche 3 des Materials teilweise nach außen gebogen dargestellt. Die obere 2 und untere Außenfläche 3 bestehen aus Aluminium und werden mit der inneren Struktur 1 verklebt. Die wabenförmige innere Struktur 1 besteht aus Aluminium-Folien, die miteinander verklebt werden.

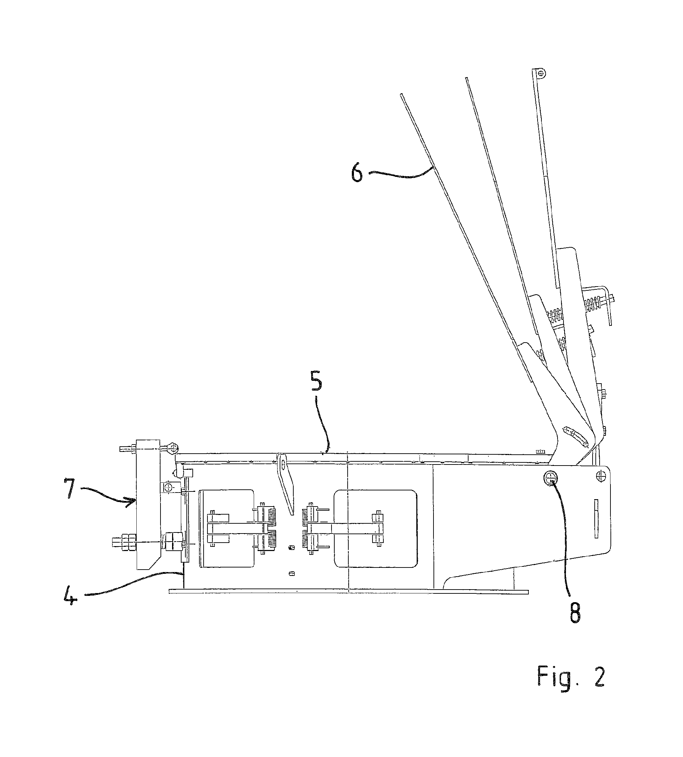

Figur 2 zeigt eine Seitenansicht einer Druckentlastungsvorrichtung mit einem Klappenrahmen 4, einer Druckentlastungsklappe 5, einer Prallvorrichtung 6 und einer Druckentlastungsklappenrückhaltevorrichtung 7. Die Druckentlastungsklappenrückhaltevorrichtung 7 ist an dem Klappenrahmen 4 befestigt. Die Druckentlastungsklappe ist um die Drehachse 8 drehbar gelagert. Der Klappenrahmen 4 wird auf dem nicht dargestellten geschlossenen System angebracht.

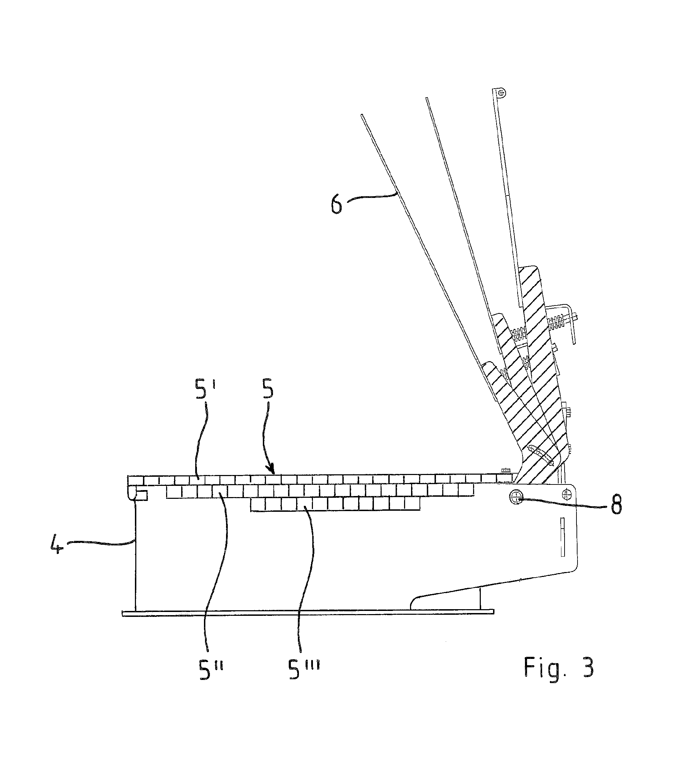

Figur 3 zeigt eine Schnittansicht einer Druckentlastungsvorrichtung mit einer Druckentlastungsklappe 5, die aus drei Schichten 5', 5", 5"' des Materials mit Wabenstruktur besteht. Die Schichten überlagern sich bereichsweise, so dass eine pyramidenartige Form entsteht. Durch die Verwendung mehrerer Schichten des Materials ist es möglich, die Druckentlastungsklappe gezielt dort zu verstärken, wo die Belastung der Druckentlastungsklappe im Explosionsfall groß ist.

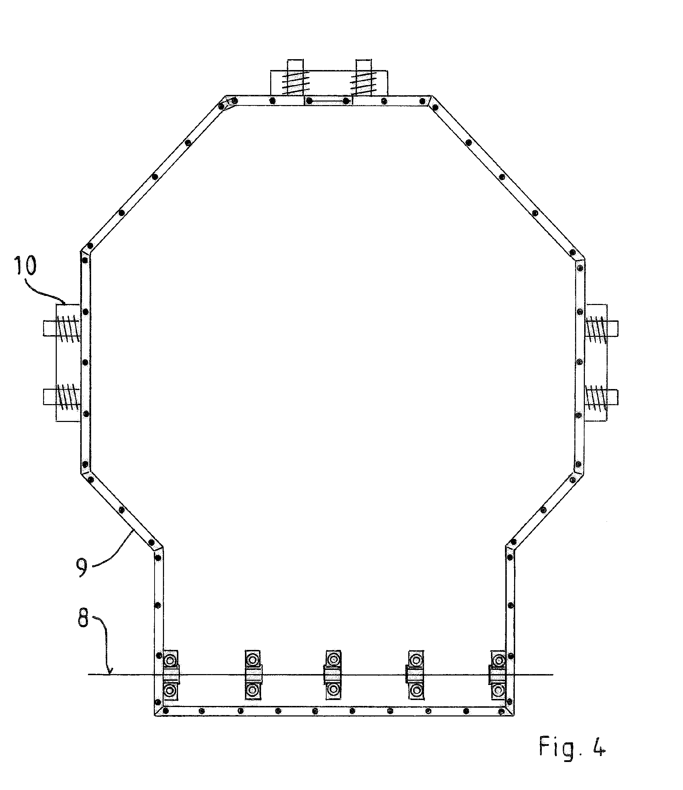

In Figur 4 ist eine Aufsicht auf längs eines Umfangs 9 polygonal ausgebildete Druckentlastungsklappe mit drei Druckentlastungsklappenverschlüssen 10 dargestellt. Die Druckentlastungsklappenverschlüsse 10 sind am nicht dargestellten Klappenrahmen befestigt.

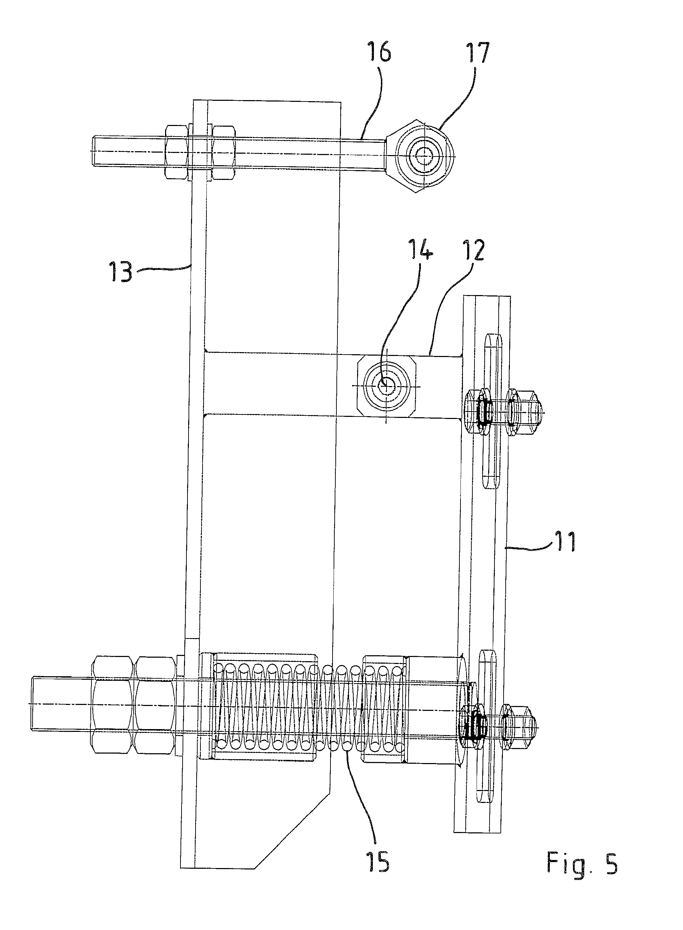

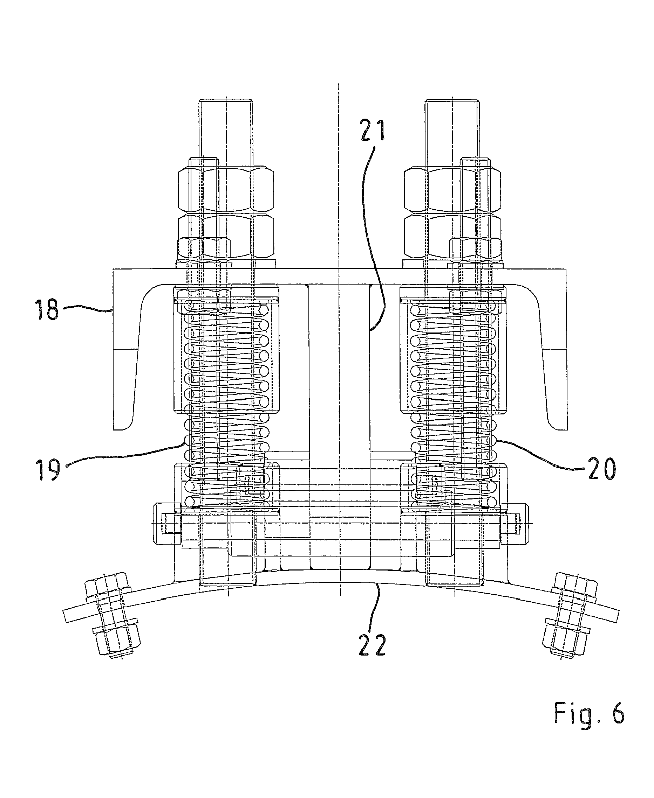

Figur 5 zeigt eine Seitenansicht einer Druckentlastungsklappenrückhaltevorrichtung. Die Druckentlastungsklappenrückhaltevorrichtung besitzt eine Scharnierplatte 11, die beispielsweise mit einem nicht dargestellten Klappenrahmen verbunden werden kann. An der Scharnierplatte 11 ist eine Scharnierlagerstange 12 angebracht. Mit dieser Scharnierlagerstange 12 ist eine Scharnierstange 13 um die Achse 14 drehbar verbunden. An der Scharnierplatte 11 ist zudem eine Scharnierfeder 15 angebracht. Diese Scharnierfeder 15 übt eine Kraft in Richtung der Scharnierstange 13 aus, so dass die Druckentlastungsklappenklemmvorrichtung 16 über die Scharnierlagerstange 12 in Richtung der Scharnierplatte 11 gedrückt wird. Die Druckentlastungsklappenklemmvorrichtung 16 besitzt eine drehbar gelagerte Scharnierrolle 17. Im Normalzustand drückt diese Scharnierrolle 17 eine nicht dargestellte Druckentlastungsklappe auf den Klappenrahmen. Die Federkraft der Scharnierfeder 15 ist so bemessen, dass die Druckentlastungsklappenklemmvorrichtung 16, die Druckentlastungsklappe im Normalzustand dichtend mit dem Klappenrahmen verbindet und im Explosionsfall frei gibt. Figur 6 zeigt einen Schnitt einer Druckentlastungsklappenrückhaltevorrichtung. In der dargestellten Ausführungsform wird eine Scharnierstange 18 mit Hilfe einer linken Scharnierfeder 19 und einer rechten Scharnierfeder 20 über eine Scharnierlagerstange 21 betätigt. Die Scharnierplatte 22 ist in diesem Ausführungsbeispiel bogenförmig ausgebildet.

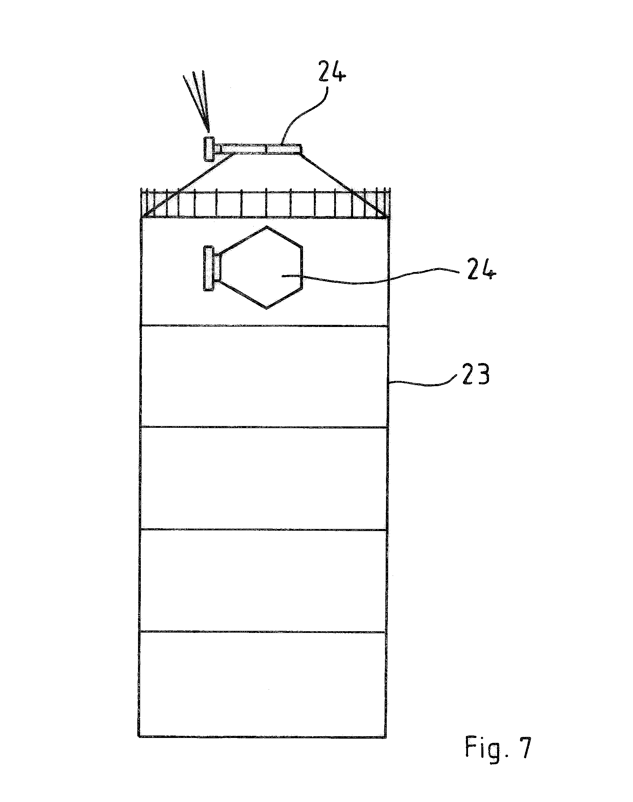

In Figur 7 ist ein Silo 23 dargestellt. An diesem Silo sind exemplarisch oben und seitlich je eine Druckentlastungsvorrichtung 24 angebracht. Häufig werden geschlossene Systeme aus Kostengründen durch Berstscheiben, die im Explosionsfall zerstört werden, abgesichert. Durch die kostengünstige Herstellungsweise der vorgestellten Druckentlastungsvorrichtung stellt die auch seitlich anbringbare Druckentlastungsvorrichtung eine Alternative zu solchen Berstscheiben dar.

## Patentansprüche

1. Druckentlastungsvorrichtung (24) zum Schutz geschlossener Systeme, wie zum Beispiel Silos oder Rohrleitungen, vor Auswirkungen ungewollter Druckerhöhungen, zum Beispiel bei Explosionen, mit einer auf einem Klappenrahmen (4) schwenkbar gelagerten Druckentlastungsklappe (5) und einer Prallvorrichtung (6), **dadurch gekennzeichnet, dass** die Druckentlastungsklappe (5) aus einem Material mit Wabenstruktur (1) ausgebildet ist.

2. Druckentlastungsvorrichtung (24) nach Anspruch 1, **dadurch gekennzeichnet, dass** die Druckentlastungsklappe (5) aus Kunststoff, Aluminium oder anderen metallischen Werkstoffen besteht.

3. Druckentlastungsvorrichtung (24) nach Anspruch 1 oder Anspruch 2, **dadurch gekennzeichnet, dass** die Druckentlastungsklappe (5) aus mehreren Schichten (5', 5", 5''') des Materials mit Wabenstruktur (1) ausgebildet ist.

4. Druckentlastungsvorrichtung (24) nach Anspruch 1 oder Anspruch 2, **dadurch gekennzeichnet, dass** die Druckentlastungsklappe (5) bereichsweise aus mehreren Schichten (5', 5", 5''') des Materials mit Wabenstruktur (1) ausgebildet ist.

5. Druckentlastungsvorrichtung (24) nach einem der vorhergehenden Ansprüche, **dadurch gekennzeichnet, dass** die Druckentlastungsklappe (5) längs eines Umfangs (9) polygonal ausgebildet ist.

6. Druckentlastungsvorrichtung (24) nach einem der vorhergehenden Ansprüche, **dadurch gekennzeichnet, dass** auf einer oberen Seite der Druckentlastungsklappe (5) mindestens eine Druckentlastungsklappenrückhaltevorrichtung (7) angebracht ist.

7. Druckentlastungsvorrichtung (24) nach einem der Ansprüche 1 bis 3, **dadurch gekennzeichnet, dass** mindestens eine Druckentlastungsklappenrückhaltevorrichtung (7) am Klappenrahmen (4) oder an einem Schlotflansch befestigt ist.

8. Druckentlastungsvorrichtung (24) nach Anspruch 6 oder Anspruch 7, **dadurch gekennzeichnet, dass** die Druckentlastungsklappe (5) durch die Druckentlastungsklappenrückhaltevorrichtung (7) mittels Scharnierfedern (15, 19, 20) über eine Scharnierstange (13, 18) mit dem Klappenrahmen (4) verbunden wird, wobei eine Scharnierlagerstange (12, 21) zwischen einer Scharnierfeder (15, 19, 20) und einer Druckentlastungsklappenklemmvorrichtung (17) angeordnet ist und die Scharnierfeder (15, 19, 20) zwischen dem Klappenrahmen (7) oder dem Schlotflansch oder der Druckentlastungsklappe (5) und der Scharnierstange (13, 18) angebracht ist.

9. Druckentlastungsvorrichtung (24) nach einem der vorhergehenden Ansprüche, **dadurch gekennzeichnet, dass** die Druckentlastungsklappe (5) beheizbar ist.

10. Druckentlastungsvorrichtung (24) nach einem der vorhergehenden Ansprüche, **dadurch gekennzeichnet, dass** eine Einbaulage der Druckentlastungsvorrichtung (24) beliebig vorgebbar ist.
